# EUROPEAN PATENT APPLICATION

(11) **EP 2 533 219 A1**
(43) Date of publication of application: **12.12.2012**
(21) Application number: 11169582.1
(22) Date of filing: 10.06.2011
(51) Int. Cl.: G08B 13/24, G08B 29/18

(54) **Anti-intrusion system comprising at least one microwave detecting device**

(71) Applicant: Lince Italia S.p.A., 00043 Ciampino (RM) (IT)
(72) Inventor: The designation of the inventor has not yet been filed
(74) Representative: Leone, Mario

(57) **Abstract**

An intrusion system having at least a microwave detecting device allows discriminating the subject able to trigger the alarm both in terms of distance and in terms of sizes and mass in a single technological solution and it comprises: an emitting antenna which is fed by a signal oscillating in the field of the microwaves; a receiving antenna the signal thereof being sent to means for demodulating the signal received by said receiving antenna; a digital signal processor performs the signal analysis and allows setting a first threshold value of the intensity and a second threshold value of the frequency, the intrusion system being arranged to emit an alarm for lower or higher values than both said threshold values.

## Description

The object of the present invention is an intrusion system comprising at least a microwave detecting device to detect the not authorized entrance of a subject in an area subjected to surveillance, said detecting device comprising an emitting antenna for emitting microwaves and a receiving antenna for receiving the reflected signal.

Intrusion systems and sensors are known, which detect the motion or the thermogramme of a subject. Currently, in order to detect the motion, they exploit the combination of different technologies such as the emission of microwaves which are reflected by the subject, the passive infrared which reacts to temperature variations in the area under surveillance, and active infrared wherein the interruption of a beam between an emitting point and a receiving point is detected.

In the systems based upon the microwaves even the related speed of a moving subject can be measured thanks to the so-called Doppler effect.

However, in these known systems it is extremely difficult to establish some thresholds for emitting an alarm signalling the violation of the reserved area. These thresholds relate, on one side, to the distance from the detecting device itself, so that the alarm activates only when the subject is at a lower distance than a prefixed threshold distance and, on the other side, to the subject sizes, so that the alarm activates only when the detected subject exceeds predetermined sizes.

The possibility of arranging these thresholds would allow to obtain a partialization of the area in front of the detecting device, said covering area, and an evaluation of the size, and consequently of the mass, of the subject to be detected.

Under partialization of the covering area the possibility of arbitrarily defining a region of the area in front of the detecting device is meant, wherein the entrance of a not authorized subject triggers an alarm, thus making possible a very precise control of the area under surveillance.

On the contrary, the evaluation of the size of a subject to be detected allows discriminating a human being from an animal, a function known in the intrusion field as *Pet Immunity.*

Being able to rely on these features in a precise way in a single detecting device, an intrusion system would be obtained, able to have more detailed (distance and mass) pieces of information at disposal with greater reliability.

The technical problem underlying the present invention is to provide an intrusion system allowing to obviate the drawbacks mentioned with reference to the known art.

Such problem is solved by an intrusion system as above specified, wherein:
- said emitting antenna is fed by a signal oscillating in the field of the microwaves;
- the signal of the receiving antenna is sent to means for demodulating the signal received by said receiving antenna;
- a digital signal processor performs a signal analysis and allows to set a first threshold value of the intensity and a second threshold value of the frequency,
the intrusion system being arranged to emit an alarm for lower or higher values than both said threshold values.

The main advantage of the above specified intrusion system consists in allowing the discrimination of the subject able to make triggering the alarm both in terms of distance and in terms of sizes and mass in a single device.

The present invention will be described herebelow according to a preferred embodiment example thereof, provided by way of example and not for limitative purposes by referring to the enclosed drawings wherein:
- figure 1 shows an example of area to be subjected to surveillance;
- figure 2 illustrates an example of partializing the area shown in figure 1;
- figure 3 shows an electronic scheme of an electronic scheme of the detecting device of an intrusion system according to the invention;
- figure 4 shows a detail of the scheme of figure 3;
- figure 5 illustrates an example for adjusting the detecting device of figure 3; and
- figures 6A, 6B, 6C, 6D, 6E, 6F and 6G illustrate different operating modes of the intrusion system according to the invention.

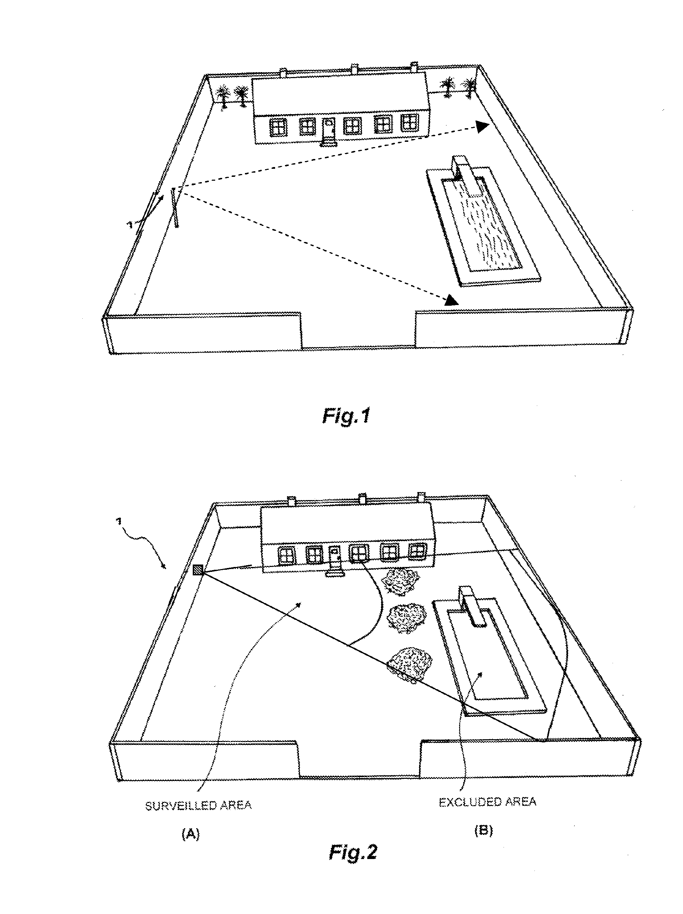

By referring to figures 1 and 2, a generic area subjected to surveillance is limited by two dotted lines, corresponding to the area which is physically lit up by a microwave detecting device 1, operating in the field of an intrusion system according to the present invention, for this purpose equipped with an emitting antenna TX and a receiving antenna RX.

By referring to figure 1, the whole area in front of the detecting device 1 is subjected to surveillance, so as to detect the crossing of a not authorized subject entering the area under surveillance.

In figure 2, instead, an area specific portion A is represented, wherein one wishes that the surveillance is effective not beyond a determined distance from the detecting device 1 itself, in order to keep active the intrusion system irrespective of what happens in the farer area portion B, wherein subjects able to generate a false alarm could be present, or however which could be authorized to be there.

It is to be noted, in figure 2, that in order to arrive at the entrance of the represented building it is however necessary to cross the area portion A nearer to the detecting device 1.

In any case, this area specific portion A could be crossed, apart from not authorized subjects the presence thereof is wanted to be detected, even by domestic animals or passing animals which could generate false alarms.

However, it will be possible discriminating the admitted animals from the not authorized subjects based upon their size, considering that the sizes of an adult man are very different from the sizes of most part of the domestic animals (dogs, cats) usually present in a garden and of the possible passing animals (birds, cats).

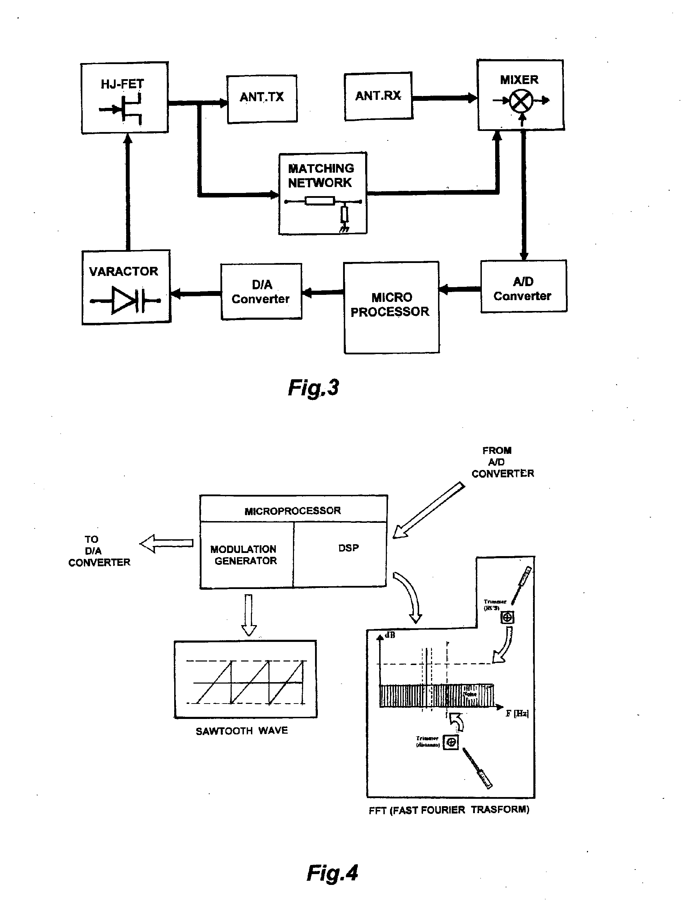

The above described selection is performed, in the herein described intrusion system, thanks to the features of the detecting device 1 described by referring to figure 3, and by the operation of the intrusion system incorporating it.

It comprises an emitting antenna TX for emitting microwaves and a receiving antenna RX for receiving the signal in case reflected by a subject in the area under surveillance.

The emitting antenna TX is fed by a signal oscillating in the field of the microwaves, with wavelength comprised between the upper bands of the radio waves and the infrared radiation.

The microwaves are comprised between 0.1 m of wavelength, which corresponds to the frequency of about 2-3 GHz, and 1 mm, which corresponds to about 300 GHz, since above 300 GHz the absorption of the electromagnetic radiations by the atmosphere is so intense that it can be considered opaque at these frequencies.

To this purpose, the detecting device comprises means to feed the receiving antenna TX with said oscillating signal, fed, in turn, by a long lasting battery of conventional type and in case even by an electrical network.

In the present example, the above-mentioned oscillating signal is generated by a Heterojunction Field Effect Transistor (HJ-FET) which is driven in frequency by a varicap diode.

Such diode, known as VARACTOR, is an integrated circuit of CMOS type wherein the varicap diode is implemented, by placing a region strongly doped with positive charges inside a region only slightly doped with positive charges, the main feature thereof is to vary the junction capability upon varying the inverted polarization tension, thus operating as variable condenser, that is as oscillator.

However, it is meant that the oscillator can be implemented even by a real diode.

Apart from the antenna TX, said signal is also sent to a homodyne receiver (MIXER) as carrier frequency thereof, through a network adaptor.

The homodyne receiver (MIXER) operates as means for demodulating the oscillating signal coming from the receiving antenna, by using the oscillating signal as carrier frequency.

This receiver too is implemented in an integrated circuit containing a Phase-locked loop (PLL).

The output signal of said receiver (MIXER) is sent to a microprocessor, containing a Digital Signal processor (DSP), through an analogic-digital (A/D) converter.

The processor DSP carries out some adjusting functions; in fact, it performs an analysis of the received signal wherein the intensity and the frequency are distinguished. Such analysis can be performed, for example, by means of a fast Fourier transform (FFT).

The intensity of the treated signal as described previously is a parameter indicating the size of a subject which has entered the transmission field of the transmitting antenna TX and which then has reflected the microwaves emitted therefrom.

In particular, the intensity is indicative of the so-called Radar Cross Section (RCS).

On the contrary, the frequency is indicative of the distance from the moving reflecting subject with respect to the receiving antenna, the position thereof coincides with the position of the detecting device itself. The frequency variation, due to the known Doppler effect, allows discriminating a fixed subject (which is part of the area under surveillance) from a moving subject.

In the light of what described, the above-mentioned processor (DSP) allows setting a first threshold value of the intensity and a second threshold value of the frequency, by means of adjusting specific precision trimmers, in case coupled to graduated scales.

In this way, by connecting the detecting device 1 to a (not represented) control equipment of the intrusion system according to the invention, the latter is arranged to emit an alarm for lower or higher values than both said threshold values.

The microprocessor, apart from carrying out the above mentioned function, contains a generator of an oscillating signal, the features thereof can be adjusted according to the performances requested by the detecting device 1. In the present embodiment example, the preferred solution of this oscillating signal is a sawtooth signal, in particular an inverted sawtooth wave (wherein the wave first of all descends downwards and then it raises abruptly - figure 4).

This wave is sent to a digital/analogic (D/A) converter which adapts the signal outgoing from the microprocessor (DSP) to control the VARACTOR, which, in turn, is able to modulate the oscillation of the HJ-FET.

The above-mentioned trimmers can be used then to set in the detecting device the thresholds of the detection distance and the size of the domestic animal to be discriminated, or however of a passing animal with small size which must not disturb the detecting device 1.

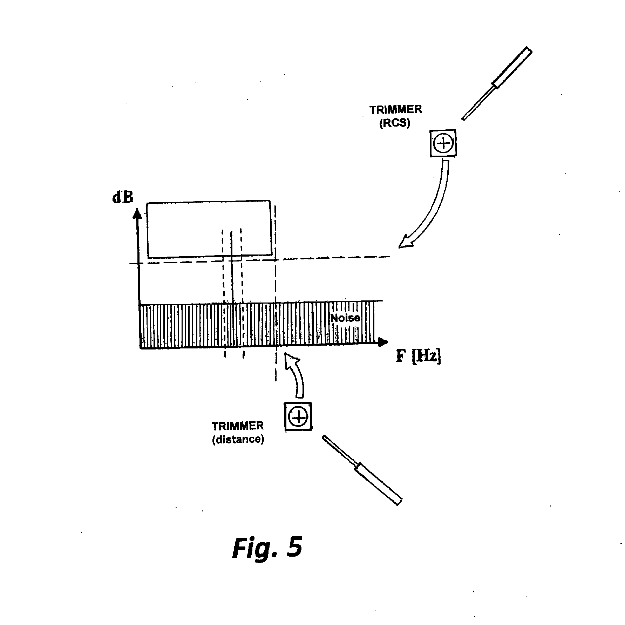

By referring to figure 5, the dotted lines around the frequency (vertical continuous line) generated by an interesting subject indicate a range wherein a FTT outlet size variation is not interpreted as an alarm.

The width of this range, then, represents and additional setting which allows discriminating between real moving subjects and oscillating subjects, for example trees or branches oscillating due to the wind, but which in reality are fixed.

In the present embodiment example, the intrusion system is set so that the alarm is generated:
- when the frequency is lower than the respective threshold value, so as to define an area under surveillance A adjacent to the detecting device 1 (figure 2); and
- when the intensity of the reflected signal is higher than the respective threshold value, in order to exclude animals with smaller size than such threshold value.

However, it is meant that the system can be set with several threshold values, in particular those related to the frequency (distance), and set also based upon the "higher" condition in terms of distance.

This allows an effective partialization of the covering area, that is the possibility by the alarm system user of defining arbitrarily an area under surveillance, wherein according to the European rule EN 50131 with title "Alarm Systems - Intrusion and Anti-theft Alarm Systems", under area under surveillance an area is meant wherein an intrusion, an intrusion attempt or the activation of a anti-theft device can be detected by an intrusion alarm system.

Furthermore, the present system allows an effective evaluation of the size and of the mass of the not authorized subject, by discriminating a human being from an animal.

At last, it is meant that the above-described detecting device 1 can be integrated with additional sensors, for example of the type with passive infrared (PIR), to obtain a possible redundancy of signals involving the generation of an alarm, in case upon varying different operating conditions.

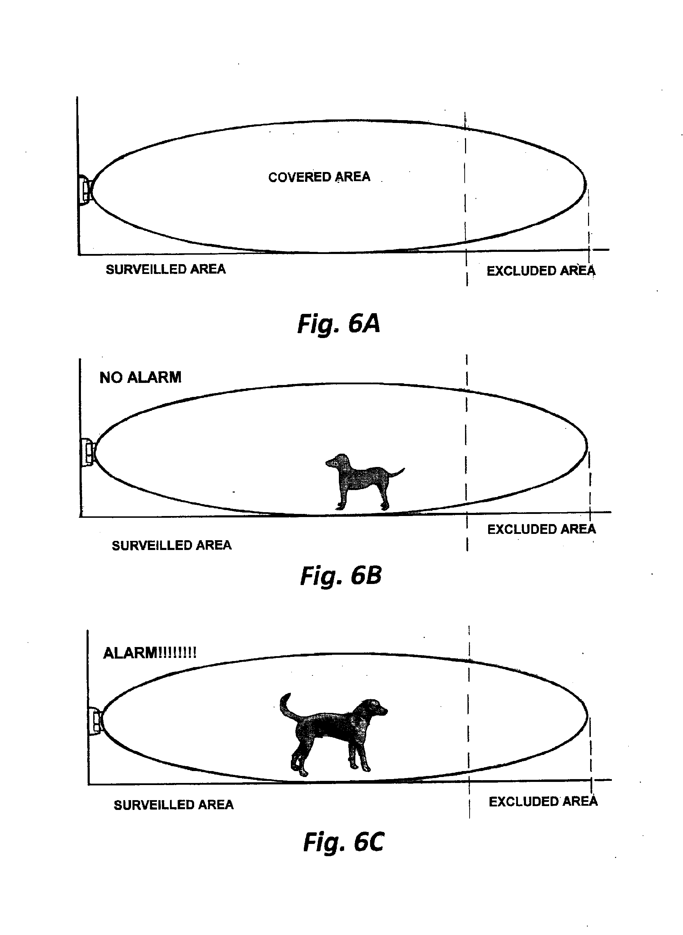

By referring to figures 6A to 6G, it is possible comprising all operating possibilities of the above-described system.

In figure 6A the area excluded from the area under surveillance based upon the threshold value is distinguished, which corresponds to the vertical dotted line, dividing the covered area into two portions.

In figure 6B, a dog with small sizes corresponding to a lower frequency than the respective set threshold value does not cause alarm even if it is in the area under surveillance.

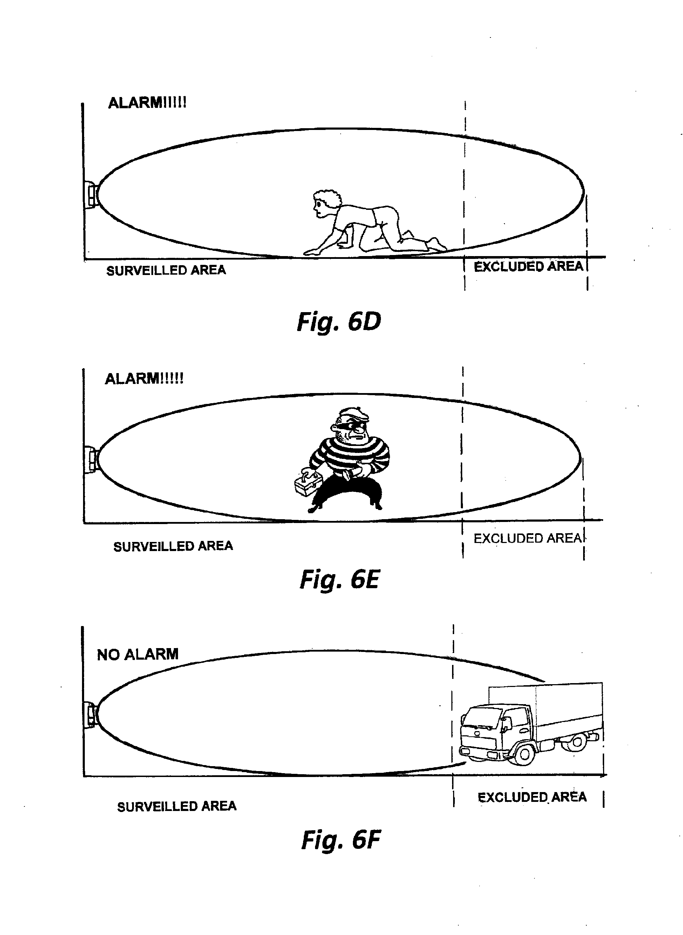

A dog with bigger size (figure 6C) or an intruder (figures 6D and 6E) independently from the posture thereof, instead, causes the alarm.

A big subject, such a lorry, does not cause the alarm if it is in the covered area, but outside the area under surveillance (figure 6F).

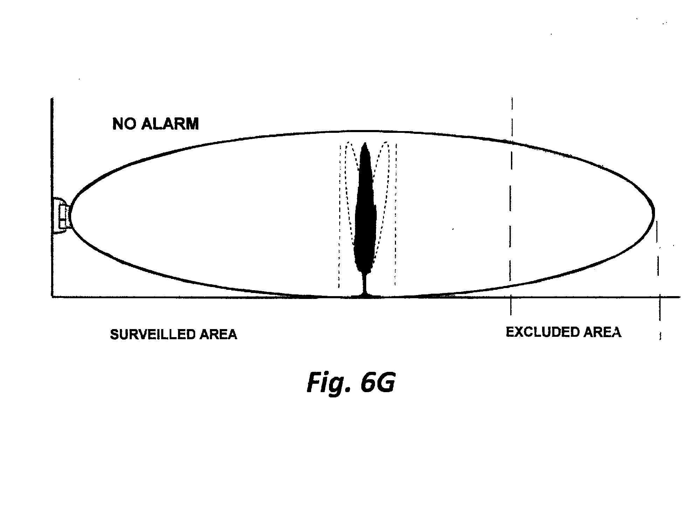

Due to the setting relating to the admitted oscillating range, a tree oscillating in the covering area does not cause the alarm (figure 6G).

The above-described components can be integrated in a single card and the microprocessor, with the processor DSP and the generator of an oscillating wave, in case can be arranged even in the control equipment of the intrusion system.

To the above-described intrusion system a person skilled in the art, in order to satisfy additional and contingent needs, can introduce several additional modifications and variants, all however within the protective scope of the present invention, as defined by the enclosed claims.

## Claims

1. An intrusion system comprising at least a microwave detecting device to detect the not authorized entrance of a subject in an area subjected to surveillance, said detecting device comprising an emitting antenna for emitting microwaves and a receiving antenna for receiving the reflected signal, wherein:
• said emitting antenna is fed by a signal oscillating in the field of the microwaves;
• the signal of the receiving antenna is sent to means for demodulating the signal received by said receiving antenna;
• a digital signal processor performs the signal analysis and allows setting a first threshold value of the intensity and a second threshold value of the frequency,
the intrusion system being arranged to emit an alarm for lower or higher values than both said threshold values.

2. The system according to claim 1, wherein said microwaves have a wavelength comprised between 0,1 m and 1 mm.

3. The system according to claim 1, comprising means for feeding the receiving antenna with said oscillating signal, fed by a long lasting battery.

4. The system according to claim 3, wherein said means for feeding the receiving antenna with said oscillating signal comprises a Heterojunction Field Effect Transistor (HJ-FET) driven in frequency by a varicap diode (VARACTOR).

5. The system according to claim 1, wherein said means for demodulating the signal received by said receiving antenna comprises a homodyne receiver which receives the signal coming from said receiving antenna, the output signal of said receiver being sent to a digital signal processor (DSP) through an analogic/digital converter.

6. The system according to claim 5, wherein said oscillating signal is sent to said homodyne receiver as carrier frequency through a network adapter.

7. The system according to claim 1, wherein said analysis signal is performed by means of a fast Fourier transform (FFT) in a digital signal processor which receives said signal through a an analogic/digital converter.

8. The system according to claim 1, comprising two precision trimmers, in case coupled to a respective graduated scale to set a first threshold value of the intensity and a second threshold value of the frequency.

9. The system according to claim 2, comprising an oscillating wave generator connected to said means for feeding the receiving antenna with said oscillating signal by means of a digital/analogic converter.

10. The system according to claim 9, wherein said oscillating wave is a sawtooth wave.

11. The system according to claim 10, wherein said sawtooth wave is an inverted sawtooth wave.

12. The system according to claim 7, wherein a frequency oscillation interval is set, which is not interpreted as an alarm.

13. System according to anyone of the previous claims, wherein the intrusion system is set so as the alarm is triggered:
• when the frequency is lower than the respective threshold value, so as to define an area under surveillance (A) adjacent to the detecting device (1); and
• when the intensity of the reflected signal is higher than the respective threshold value, in order to exclude animals with smaller sizes than such threshold value.

14. The system according to anyone of the previous claims, wherein the detecting device is integrated with additional sensors, for example of the type with passive infrared (PIR).
